# EUROPEAN PATENT SPECIFICATION

(11) **EP 0 683 467 B1**
(45) Date of publication and mention of the grant of the patent: **29.12.1999**
(21) Application number: 94119827.7
(22) Date of filing: 15.12.1994
(51) Int. Cl.: G06K 7/08

(54) **Paper sheet feed device for magnetic character identifier**
Papierblattzufuhrvorrichtung für einen magnetischen Charakteridentifizierer
Dispositif d'alimentation en feuilles de papier pour un dispositif d'identification de caractères magnétiques

(30) Priority: 13.05.1994 KR 9410533 U
(43) Date of publication of application: 22.11.1995
(73) Proprietor: KD Electronics, Inc., Seoul (KR); Hantle System, Seoul (KR)
(72) Inventor: Lee, Won Gee, Seoul (KR)
(74) Representative: Antritter, Jürn Dietolf Gerald

(56) References cited:
- GB-A- 2 170 165
- US-A- 4 585 125
- US-A- 4 879 607

## Description

### BACKGROUND OF THE INVENTION

### Field of the Invention

The present invention relates in general to magnetic character identifiers for examining the genuineness of checks and bills and, more particularly, to a paper sheet feed device for such magnetic character identifiers for horizontally feeding paper sheets printed with magnetic characters by transmitting the rotating force of a drive motor through reduction gears.

### Description of the Prior Art

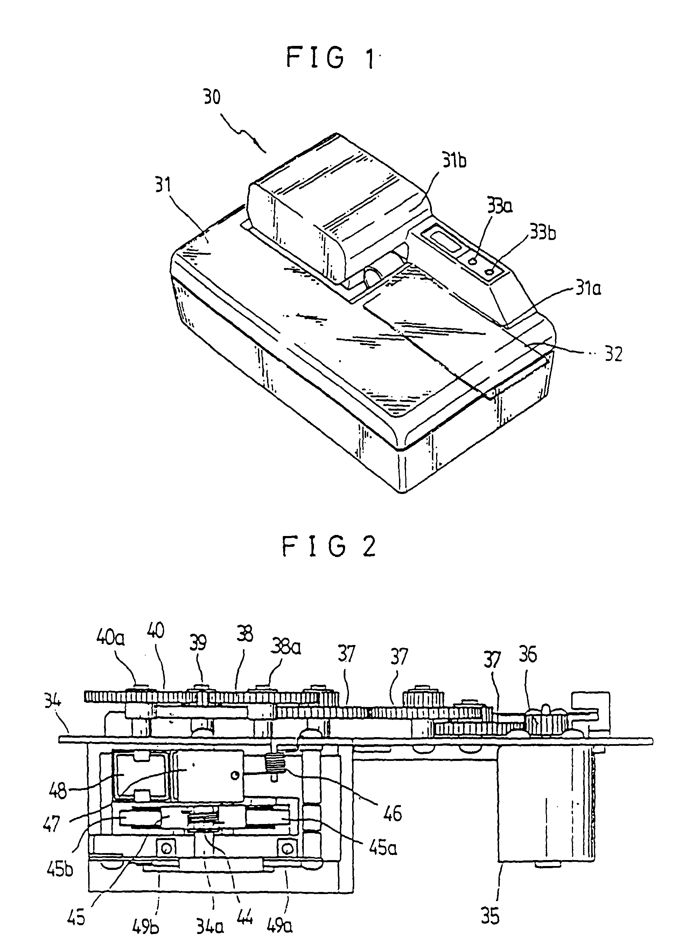

A magnetic character identifier shown in Fig. 1 identifies the magnetic characters printed or checks or on bills and generates electric signals and outputs the electric signals to a terminal unit, thus to examine the genuineness of the checks or of the bills.

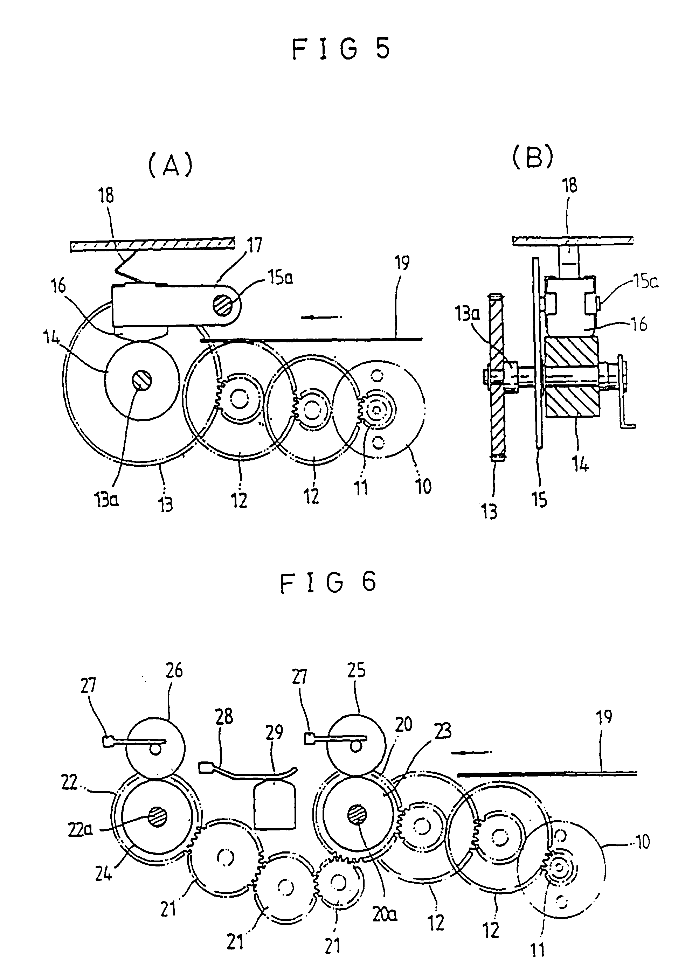

With reference to Figs. 5A and 5B, there is shown a typical paper sheet feed device for such a magnetic character identifier. As shown in this drawing, a drive motor 10 is placed in a case (not shown) of the identifier. The drive motor 10 is provided with a pinion gear 11, which pinion gear 11 gears into a reduction gear train 12 gearing a rotating gear 13. The pinion gear 11 thus transmits the rotating force of the drive motor 10 to the rotating gear 13 through the reduction gear train 12.

A feed roller 14 is rotatably mounted to the shaft 13a of the rotating gear 13. Placed above the feed roller 14 is a holder 17 which carries a magnetic head 16. The holder 17 which is pivoted to a shaft 15a of a bracket 15 is biased on its top surface by a plate spring 18 downward, so that the holder 17 brings the magnetic head 16 into close contact with the feed roller 14.

In order to examine the genuineness of a paper sheet 19, such as a check or a bill, using the magnetic character identifier having the above paper sheet feed device, the paper sheet 19 is nipped between the magnetic head 16 and the feed roller 14. At this time, as the rotating force of the drive motor 10 is transmitted to the rotating gear 13 through the reduction gear train 12, the feed roller 14 of the rotating gear 13 is rotated counterclockwise and feeds the paper sheet 19 due to the frictional force generated between the magnetic head 16 and the feed roller 14. While the paper sheet 19 is fed by both the feed roller 14 and the magnetic head 16, the magnetic head 16 identifies the magnetic characters printed on the paper sheet 19 and generates electric signals and outputs the electric signals to a terminal unit, thus to examine the genuineness of the paper sheet 19.

However, the magnetic head 16 is always brought into direct contact with the feed roller 14 when no paper sheet 19 is nipped between the magnetic head 16 and the feed roller 14. Therefore, the magnetic head 16 is inevitably abraded and this makes the magnetic head 16 short-lived. In addition, since the above paper sheet feed device uses only one feed roller 14, the magnetic head 16 starts magnetic character identification prior to normal feeding of the paper sheet 19, thus to deteriorate the magnetic character identifying effect of the identifier for the initial part of the paper sheet 19.

Turning to Fig. 6, there is shown another typical paper sheet feed device for a magnetic character identifier. As shown in this drawing, a drive motor 10 placed in the interior of the identifier case has a pinion gear 11, which pinion gear 11 gears into a reduction gear train 12 gearing into a first rotating gear 20. The first rotating gear 20 in turn gears into an idle gear train 21 gearing into a second rotating gear 22, thus to transmit the rotating force of the drive motor 10 to the second rotating gear 22 through the idle gear train 21. Therefore, this paper sheet feed device rotates first and second feed rollers 23 and 24 using the rotating force of the drive motor 10, which first and second feed rollers 23 and 24 are mounted to the shafts 20a and 22a of the first and second rotating rollers 20 and 22 respectively.

Placed on the first and second feed rollers 23 and 24 are support rollers 25 and 26. The support rollers 25 and 26 are biased by their associated plate springs 27 downward, so that the support rollers 25 and 26 can be rotated at the same time of rotation of the feed rollers 23 and 24. A magnetic head 29 which is brought into close contact with a plate spring 18 is placed between the first and second feed rollers 23 and 24.

In order to examine the genuineness of the paper sheet 19 using the magnetic character identifier having the above paper sheet feed device, the paper sheet 19 is nipped between the first feed roller 20 and its support roller 25. The paper sheet 19 passes between the magnetic head 29 and its plate spring 28, so that the magnetic head 29 identifies the magnetic characters printed on the paper sheet 19 and generates electric signals and outputs the electric signals to the terminal unit, thus to examine the genuineness of the paper sheet 19. Thereafter, the paper sheet 19 is discharged to the outside of the identifier by the action of both the second feed roller 22 and its support roller 26.

However, this paper sheet feed device has a problem that the magnetic head 29 can not apply paper sheet feeding force for the paper sheet 19, so that the magnetic head 29 may fail in precise identification of the magnetic characters particularly when folded or crumpled paper sheet is fed thereto.

### SUMMARY OF THE INVENTION

It is, therefore, an object of the present invention to provide a paper sheet feed device for a magnetic character identifier in which the above problems can be overcome and which prevents the identifier from being short-lived due to abrasion of the magnetic head, a kernel element of the identifier, and improves the magnetic character identifying effect and achieves the recent trend of compactness of the identifier.

In order to accomplish the above object, a paper sheet feed device for a magnetic character identifier in accordance with a preferred embodiment of the present invention comprises: first and second rotating gears applied with rotating force of a drive motor through a plurality of reduction gears and rotated in the same direction by their associated idle gears; first and second feed rollers mounted to rotating shafts of the first and second rotating gears respectively; a head roller concentrically mounted to a rotating shaft of the second feed roller, the head roller being selectively idle-rotated; a pair of idle rollers connected to each other by means of a lever and brought into elastic and close contact with the first and second feed rollers respectively by a first biasing member; and a magnetic head brought into elastic and close contact with the head roller by a second biasing member.

### BRIEF DESCRIPTION OF THE DRAWINGS

Other objects and aspects of the invention will become apparent from the following description of embodiments with reference to the accompanying drawings in which:
Fig. 1 is a perspective view of a magnetic character identifier having a paper sheet feed device in accordance with the present invention;
Fig. 2 is a plan view showing a construction of the paper sheet feed device for the magnetic character identifier of the present invention;
Fig. 3 is a side view of the paper sheet feed device of Fig. 2, showing a mechanism for transmission of drive motor's rotating force of the feed device;
Fig. 4 is a front view of the paper sheet feed device of Fig. 3;
Figs. 5A and 5B are a side view and a front view of a typical paper sheet feed device for a magnetic character identifier; and
Fig. 6 is a side view of another typical paper sheet feed device for a magnetic character identifier.

### DESCRIPTION OF THE PREFERRED EMBODIMENTS

With reference to Figs. 1 to 4, there is a paper sheet feed device for a magnetic character identifier in accordance with a preferred embodiment of the present invention.

As shown in Fig. 1, a case 31 of the identifier 30 is provided with a paper sheet guider 31a for guiding a paper sheet 32, such as a check or a bill, to be identified. Placed on a top exterior surface of the case 31 at a side of a drive unit 31b is a pair of LEDs (light emit diodes) 33a and 33b for confirming of identification results of magnetic characters printed on the paper sheet 32.

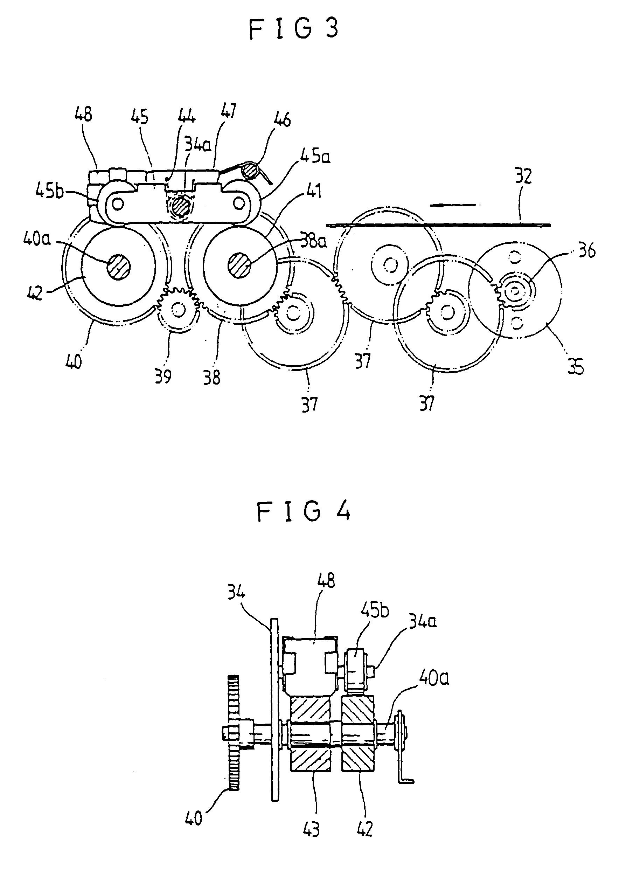

In the interior of the case 31, a drive motor 35 is mounted on an end section of a bracket 34 as shown in Figs. 2 and 4. The drive motor 35 has a pinion gear 36. The pinion gear 36 gears into a reduction gear train, which reduction gear train comprises a plurality of reduction gears 37 and in turn gears into a first rotating gear 38. The pinion gear 36 thus transmits the rotating force of the drive motor 35 to the first rotating gear 38 through the reduction gear train 37. The first rotating gear 38 in turn gears into an idle gear 39, which idle gear 39 in turn gears into second rotating gear 40 and connects the first rotating gear 38 to the second rotating gear 40 and lets the first and second rotating gears 38 and 40 be rotated in the same direction.

Mounted to the rotating shafts 38a and 40a of the first and second rotating gears 38 and 40 are first and second feed rollers 41 and 42 for feeding the paper sheet 32 in a direction. A head roller 43 which will be selectively idle-rotated by the paper sheet's feeding force is concentrically mounted to a shaft of the second feed roller 42 between the second feed roller 42 and the bracket 34.

Above the first and second feed rollers 41 and 42, a lever 45 is elastically mounted to a pin 34a of the bracket 34 with interposition of a first biasing member or a first torsion spring 44. Rotatably coupled to opposed ends of the lever 45 are a pair of idle rollers 45a and 45b which are brought into elastic and close contact with the first and second feed rollers 41 and 42 respectively by the first torsion spring 44.

A holder 47 is mounted to the pin 34a of the lever 34 and biased by a second biasing member or a second torsion spring 46, thus to be provided with elasticity. The front end of the holder 47 is provided with a magnetic head 48, so that the magnetic head 48 will be brought into elastic and close contact with the head roller 43 by the biasing force of the second torsion spring 46.

Inlet and outlet sensors 49a and 49b are placed in opposed sides about the pin 34a of the bracket 34, so that the sensors 49a and 49b are spaced apart from each other by a predetermined distance. The inlet and outlet sensors 49a and 49b are adapted for sensing inlet state of the paper sheet 32 and outlet state of the paper sheet 32 respectively.

In operation of the magnetic character identifier having the above paper sheet feed device, the paper, such as a check or a bill, is inserted into the drive unit 31b from the guider 31a of the case 31 as shown in Fig. 1. When the paper sheet 32 reaches the inlet sensor 49a as shown in Fig. 2, the inlet sensor 49a senses the paper sheet 32 and starts the drive motor 35. The rotating force of the drive motor 35 is transmitted to the first rotating gear 38 through the pinion gear 36 and the reduction gears 37.

Therefore, the first rotating gear 38 and the second rotating gear 40, which are connected to each other by the idle gear 39 commonly gearing into the first and second rotating gear 38 and 40, are rotated in the same direction. In response to the same directional rotation of the first and second rotating gear 38 and 40, the first and second feed rollers 41 and 42 and the idle rollers 45a and 45b are rotated, thus to feed the paper sheet 32. Here, the rollers 41 and 42 are mounted to the rotating shafts 38a and 40a of the first and second rotating gears 38 and 40, while the rollers 45a and 45b are rotatably coupled to the opposed ends of the lever 45 and brought into elastic and close contact with the first and second feed rollers 41 and 42 by the first torsion spring 44.

When paper sheet 32 reaches the second feed roller 42, the sheet 32 is introduced between the magnetic head 48 and the stopped head roller 43, so that the head roller 43 is initially rotated due to the paper sheet's feeding force and discharges the paper sheet 32. While the paper sheet 32 passes between the magnetic head 48 and the head roller 43, the magnetic head 48 identifies the magnetic characters printed on the paper sheet 32 and generates electric signals.

The magnetic head 48 in turn outputs the electric signals to a terminal unit, thus to examine the genuineness of the paper sheet 32. During the above magnetic character identifying operation of the identifier 30, the magnetic character identification results of the magnetic head 48 is confirmed by the LEDs 33a and 33b which are placed on the top exterior surface of the case 31 at the side of the drive unit 31b and selectively display a red signal and a green signal respectively.

As described above, in a paper sheet feed device for a magnetic character identifier of the present invention, the magnetic head, a kernel element of the identifier, is not abraded except when a paper sheet to be identified is fed between the magnetic head and an idle-rotating head roller, thus to let the identifier be long-lived. The head roller also uniformly biases the paper sheet toward the magnetic head, thus to improves the magnetic character identifying effect of the identifier. Another advantage of the paper sheet device of the invention is resided in that it achieves the recent trend of compactness of the magnetic character identifier.

## Claims

1. A magnetic character identifier for identifying magnetic characters printed on a paper sheet and examining the genuineness of the paper sheet, said identifier having a paper sheet feed device comprising:
first and second rotating gears (38,40) applied with rotating force of a drive motor (35) through a plurality of reduction gears (37) and rotated in the same direction by their associated idle gears (39);
first and second feed rollers (41,42) mounted to rotating shafts (38a,40a) of said first and second rotating gears (38,40) respectively;
a pair of idle rollers (45a, 45b) connected to each other by means of a lever (45) and brought into elastic and close contact with said first and second feed rollers (41,42) respectively by a first biasing member; and
a magnetic head (48);
characterized in that it further comprises a head roller (43) concentrically mounted to the rotating shaft (40a) of said second feed roller (42), said head roller (43) being selectively idle-rotated; wherein
said magnetic head (48) is brought into into elastic and close contact with said head roller (43) by a second biasing member.

## Patentansprüche

1. Gerät zum Erkennen magnetischer Zeichen, das auf einem Papierblatt gedruckte magnetische Zeichen erkennt und die Echtheit des Papierblatts überprüft, wobei das Erkennungsgerät eine Papierblattfördervorrichtung aufweist, die
erste und zweite Rotationsgetriebe (38, 40), die über eine Vielzahl von Untersetzungsgetrieben (37) mit der Rotationskraft eines Antriebsmotors (35) angetrieben und durch ihre zugehörigen Leerlaufgetriebe (39) in derselben Richtung gedreht werden,
erste und zweite Förderrollen (41, 42), die jeweils auf den Rotationswellen (38a, 40a) der ersten und zweiten Rotationsgetriebe (38, 40) befestigt sind,
zwei Leerlaufrollen (45a, 45b), die durch einen Hebel (45) miteinander verbunden sind und durch ein erstes Vorspannglied in einen elastischen und engen Kontakt mit jeweils der ersten und zweiten Förderrolle (41, 42) gebracht werden, und
einen Magnetkopf (48) umfasst,
dadurch gekennzeichnet, dass sie ferner eine Kopfrolle (43) umfasst, die konzentrisch auf der Rotationswelle (40a) der zweiten Förderrolle (42) angebracht ist, wobei sich die Kopfrolle (43) selektiv im Leerlauf dreht,
und dass der Magnetkopf (48) durch ein zweites Vorspannglied in einen elastischen und engen Kontakt mit der Kopfrolle (43) gebracht wird.

## Revendications

1. Identificateur de caractère magnétique identifiant les caractères magnétiques imprimés sur une feuille de papier et examinant l'authenticité de la feuille de papier, ledit identificateur ayant un dispositif d'alimentation de feuille de papier comprenant:
des premier et deuxième engrenages tournants (38, 40) appliqués avec une force de rotation d'un moteur d'entraînement (35) par l'intermédiaire d'une pluralité d'engrenages de réduction (37) et mis en rotation dans la même direction par leurs roues folles d'engrenages (39) associées;
des premier et deuxième galets d'alimentation (41, 42) montés sur les axes tournants (38a, 40a) desdits premier et deuxième engrenages tournants (38, 40) respectivement;
une paire de galets libres (45a, 45b) reliés entre eux au moyen d'un levier (45) et amenés en contact élastique et étroit avec lesdits premier et deuxième galets d'alimentation (41, 42) respectivement par un premier élément presseur; et
une tête magnétique (48);
caractérisée en ce qu'il comprend de plus un galet principal (43) monté concentriquement à l'axe tournant (40a) dudit deuxième galet d'alimentation (42), ledit galet principal (43) étant sélectivement mis en rotation à vide;
et que ladite tête magnétique (48) est amenée en contact élastique et étroit avec ledit galet principal (43) par un deuxième élément presseur.
